# EUROPEAN PATENT SPECIFICATION

(11) **EP 4 392 530 B1**
(45) Date of publication and mention of the grant of the patent: **09.12.2026**
(21) Application number: 22765870.5
(22) Date of filing: 18.08.2022
(51) Int. Cl.: C11D 3/22, B65D 65/46, C11D 17/04

(54) **FILMS AND CAPSULES**
FILME UND KAPSELN
FILMS ET CAPSULES

(30) Priority: 27.08.2021 EP 21193525
(43) Date of publication of application: 03.07.2024
(73) Proprietor: Unilever IP Holdings B.V., 6708 WH Wageningen (NL); Unilever Global IP Limited, Wirral, Merseyside CH62 4ZD (GB)
(72) Inventor: PARKER, Andrew, Philip, Wirral Merseyside CH63 3JW (GB); JIMENEZ SOLOMON, Maria, Fernanda, Wirral Merseyside CH63 3JW (GB)
(74) Representative: Unilever Patent Group
(86) International application number: PCT/EP2022/073060
(87) International publication number: WO 2023/025648

(56) References cited:
- EP-A1- 0 892 744
- WO-A1-02/055649
- KR-B1- 100 729 540
- US-A1- 2021 230 513
- COFFIN D R ET AL: "PHYSICAL AND MECHANICAL PROPERTIES OF HIGHLY PLASTICIZED PECTIN/ STARCH FILMS", JOURNAL OF APPLIED POLYMER SCIENCE, WILEY SUBSCRIPTION SERVICES, INC., A WILEY COMPANY, NEW YORK, vol. 54, no. 9, 28 November 1994 (1994-11-28), pages 1311 - 1320, XP000511824, ISSN: 0021-8995, DOI: 10.1002/APP.1994.070540913
- SUSARLA RAMANA ET AL: "Novel use of superdisintegrants as viscosity enhancing agents in biocompatible polymer films containing griseofulvin nanoparticles", POWDER TECHNOLOGY, vol. 285, 12 June 2015 (2015-06-12), pages 25 - 33, XP029278460, ISSN: 0032-5910, DOI: 10.1016/J.POWTEC.2015.06.024
- WANG WENJUN ET AL: "Citrus pectin modified by microfluidization and ultrasonication: Improved emulsifying and encapsulation properties", ULRASONICS SONOCHEMISTRY, BUTTERWORTH-HEINEMANN, GB, vol. 70, 1 September 2020 (2020-09-01), XP086365542, ISSN: 1350-4177, [retrieved on 20200901], DOI: 10.1016/J.ULTSONCH.2020.105322
- SRIAMORNSAK P ET AL: "Mucoadhesion of pectin as evidence by wettability and chain interpenetration", CARBOHYDRATE POLYMERS, APPLIED SCIENCE PUBLISHERS , LTD BARKING, GB, vol. 74, no. 3, 4 November 2008 (2008-11-04), pages 458 - 467, XP023904793, ISSN: 0144-8617, [retrieved on 20080410], DOI: 10.1016/J.CARBPOL.2008.03.022

## Description

The present invention relates to capsules of water soluble film for containing homecare substrate treatment compositions.

Despite the prior art there remains a need for renewable films which can be processed to make strong capsules using with e.g. sheet film. WO 02/055649 A1 discloses pectin capsules containing perfume oil and glucose that are employed in laundry compositions.

Accordingly, and in a first aspect, there is provided a film comprising pectin having a weightn average molecular weight in the range 250,000 - 500,000 g/mol and wherein the film thickness is from 40 to 200 micrometres (microns).

In a second aspect, there is provided a water-soluble capsule comprising a film, the film comprising pectin having a weight average molecular weight in the range 250,000 - 500,000 g/mol and wherein the film thickness is from 40 to 200 micrometres (microns).

The water soluble capsule preferably comprises at least one internal compartment enclosed by the water-soluble film, the compartment having an internal space and containing a home care composition within the internal space.

The applicant has surprisingly found that water soluble capsules made from films comprising pectin having the claimed weight average molecular weight and the claimed film thickness have good strength and extensibility.

The following terms, as used here are defined below:
**"A"** and **"an",** are understood to mean one or more of what is claimed or described.
**"Alkyl"** refers to a straight or branched chain monovalent hydrocarbon radical having a specified number of carbon atoms. Alkyl groups may be unsubstituted or substituted with substituents that do not interfere with the specified function of the composition and may be substituted once or twice with the same or different group. Substituents may include alkoxy, hydroxy, mercapto, amino, alkyl substituted amino, nitro, carboxy, carbonyl, carbonyloxy, cyano, methylsulfonylamino, or halogen, for example. Examples of "alkyl" include, but are not limited to, methyl, ethyl, n-propyl, isopropyl, n-butyl, s-butyl, t-butyl, n-pentyl, n-hexyl, 3-methylpentyl, and the like.
**"Biodegradable"** means the complete breakdown of a substance by microorganisms to carbon dioxide water biomass, and inorganic materials.
**"Film"** refers to a water soluble material and may be be sheet-like material. The length and width of the material may far exceed the thickness of the material, however the film may be of any thickness.
**"Polymer"** refers to a macromolecule comprising repeat units where the macromolecule has a molecular weight of at least 1000 Daltons. The polymer may be a homopolymer, copolymer, terpoymer etc.
**"Substrate"** mean any suitable substrate including fabric articles or garments, bedding, towels etc., and dishes, where "dishes" is used herein in a generic sense, and encompasses essentially any items which may be found in a dishwashing load, including crockery chinaware, glassware, plasticware, hollowware and cutlery, including silverware. **"Thermoforming"** means a process in which the film is deformed by heat, and in particular it may involve the following: a first sheet of film is subjected to a moulding process to form an enclosure in the film e.g. forming a recess in the film. Preferably this involves heating prior to deformation. The deformation step is preferably enabled by laying the film over a cavity and applying a vacuum or an under pressure inside the cavity (to hold the film in the cavity). The recesses may then be filled. The process may then include overlaying a second sheet over the filled recesses and sealing it to the first sheet of film around the edges of the recesses to form a flat sealing web, thus forming a capsule which may be a unit dose product. The second film may be thermoformed during manufacture. Alternatively, the second film may not be thermoformed during manufacture.
**"Substrate treatment composition"** means any type of treatment composition for which it is desirable to provide a dose thereof in a water-soluble and is designed for treating a substrate as defined herein. Such compositions may include, but are not limited to, laundry cleaning compositions, fabric softening compositions, fabric enhancing compositions, fabric freshening compositions, laundry prewashing compositions, laundry pretreating compositions, laundry additives (e.g., rinse additives, wash additives, etc.), post-rinse fabric treatment compositions, dry cleaning compositions, ironing aid, dish washing compositions, hard surface cleaning compositions, and other suitable compositions that may be apparent to one skilled in the art in view of the teachings herein.
**"Unit dose"** means an amount of composition suitable to treat one load of laundry, such as, for example, from about 0.05 g to about 100 g, or from 10 g to about 60 g, or from about 20 g to about 40 g. A unit dose product may be in the form of a film package containing the composition, the package may be referred to as a capsule or pouch. **"Water-soluble"** means the article (film or package) dissolves in water at 20° C.

Unless otherwise noted, all component or composition levels are in reference to the active portion of that component or composition, and are exclusive of impurities, for example, residual solvents or by-products, which may be present in commercially available sources of such components or compositions.

Except in the examples and comparative experiments, or where otherwise explicitly indicated, all numbers are to be understood as modified by the word "about".

All percentages ( expressed as "%") and ratios contained herein are calculated by weight unless otherwise indicated. All conditions herein are at 20° C. and under the atmospheric pressure, unless otherwise specifically stated. All polymer molecular weights are determined by weight average molecular weight unless otherwise specifically noted. Numerical ranges expressed in the format "from x to y" are understood to include x and y. When for a specific feature multiple preferred ranges are described in the format "from x to y", it is understood that all ranges combining the different endpoints are also contemplated. In specifying any range of values or amounts, any particular upper value or amount can be associated with any particular lower value or amount.

### Pectin

The pectin may be unmodified or modified and such modification includes substitution (alkylation, amidation, quaternization, thiolation, sulfation, oxidation, etc.), chain elongation (cross-linking and grafting) and depolymerization (chemical, physical, and enzymatic degradation).

Pectins comprise helical chains of galacturonic acid (GalA) residues linked by α-1, 4 glycosidic linkages, wherein the carboxyl groups may be esterified to any degree with methyl groups or may be partially or completely converted into salts.

The pectin may comprise any type of galacturonan including heterogalacturonans (HG), substituted galacturonans, rhamnogalacturonan I pectins (RG-I), rhamnogalacturonan II (RG-II), xylogalacturonan (XGA) or any mixture thereof.

### Esterification

The esterification level or degree of esterification (DE) is the ratio of esterified galacturonic acid groups to total galacturonic acid groups (and thus having a value between 0% and 100%). Preferably the degree of esterification is from 1% to 49%, more preferably from 25% to 48%, most preferably from 24 to 35%.

The level of esterification *by methyl groups* may be such that the pectin is a high methoxy pectin (HM pectin) - with more than half of all the galacturonic acid esterified; or a low methoxy pectin (LM pectin) with less than half of all the galacturonic acid esterified. Preferably the degree of methoxylation is from 1% to 49%, more preferably from 25% to 48%, most preferably from 24 to 35%.

Preferably the pectin is a low methoxy pectin.

### Amidated Pectin

Preferably the pectin is amidated.

A representative segment of a nonacetylated, non-amidated pectin molecule:

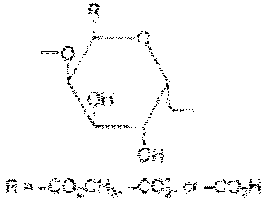

By "amidated pectin" it is intended to mean that the pectin is modified by conversion of a portion of the carboxylic groups to carboxylic acid amide, e.g. as with the amidated unit shown below:

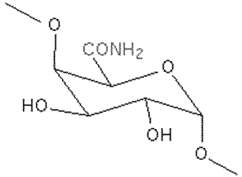

Preferably the degree of amidation is from 1% to 90%, more preferably from 10 to 50% even more preferably from 20% to 40% most preferably from 20 to 30%. Degree of amidation (DA) can be measure by various known methods for example near infrared spectroscopy, based on the total number of galacturonic acid units in the molecule.

Pectins may be amidated by any suitable method e.g.by ammonia which may be dissolved in methanol or in aqueous form. This converts the methyl ester groups into carboxamide [-CONH2] groups. Because in the process, methyl ester groups are lost as they are converted into carboxamide groups a low methoxy (LM) pectin (by definition) is formed. Amdiated (LM) pections may have 15 - 25% of the carboxyl groups converted into carboxamide groups.

### Low Methoxy Amidated Pectin

Amidation may achieve reduced methyl levels and so providing a low methoxy, amidated pectin.

### Pectin Molecular Weight (MW)

The pectin has an average molecular weight in the range 250,000 g/mol - 500,000 g/mol.

Suitably the pectin has an average molecular weight not greater than 450, 000 (450K) g/mol, preferably not greater than 350,000 g/mol, more preferably not greater than 300,000 g/mol.

Suitably the pectin has an average molecular weight not less than 300,000 g/mol.

### Source

The pectin is preferably plant derived and may be sourced from any suitable source such as citrus peel or pomace from e.g., both by-products of fruit production. Pomace may also be obtained from sugar beet.

### PVOH

The film may comprise polyvinyl alcohol (PVOH). The PVOH may be present at a maximum level of 50%wt, preferably at maximum of 25%, (%wt based on total dry (cast) weight of the film).

Advantageously the film is substantially free of polyvinyl alcohol (PVOH) and more preferably 0%, by weight of the composition, of the component.

### Bittering Agent

Preferably the film comprises a bittering agent.

Preferably this is selected from: capsicinoids (including capsaicin); vanillyl ethyl ether; vanillyl propyl ether; vanillyl butyl ether; vanillin propylene; glycol acetal; ethylvanillin propylene glycol acetal; capsaicin; gingerol; 4-(1-menthoxymethyl)-2-(3'-methoxy-4'-hydroxy-phenyl)-1,3-dioxolane; pepper oil; pepperoleoresin; gingeroleoresin; nonylic acid vanillylamide; jamboo oleoresin; *Zanthoxylum piperitum* peel extract; sanshool; sanshoamide; black pepper extract; chavicine; piperine; spilanthol; and mixtures thereof.

Preferred bittering agents include pungents e.g. capsaicinoids, which includes capsaicin, dihydrocapsaicin, nordihydrocapsaicin, homodihydrocapsaicin, homocapsaicin, and nonivamide. Other pungents which can act as bittering agents include pungents, piperine, allyl isothiocyanate, and resinferatoxin), A particularly preferred bittering agent is capsaicin.

Bittering agents may also be selected from denatonium salts such as denatonium benzoate, denatonium saccharide, denatonium chloride; benzoic benzylamine amide, , trichloroanisole, methyl anthranilate and quinine (and salts of quinine).

Further examples of bittering agents include flavonoids such as quercefin and naringenin , naringin, sucrose octaacetate, quassinoids such as quassin and brucine and agents derived from plant or vegetable matter, such as chemical compounds derived from chilli pepper plants, those derived from a plant species of the genus cynaro, alkaloids and amino acids.

Preferably, the bittering agent is selected from the group consisting of denatonium benzoate, denatonium saccharide, quinine or a salt of quinine. The chemical name of denatonium is phenylmethyl-[2-[(2,6-dimethylphenyl)amino]-2-oxoethyl]-diethylammonium. In particular embodiments, the bittering agent is denatonium benzoate or denatonium saccharide.

The bittering agent may be incorporated within the film or in a film-coating on the exterior surface of the film (prior to making the capsule) or water-soluble capsule. Preferably the bittering agent is incorporated into the film.

The bittering agent may be incorporated into the matrix of a water-soluble polymer included in the film by dissolving the bittering agent in a water-soluble polymer solution before the unprinted region of the film is formed. The bittering agent may be present in film material in a range of 100 to 5000 ppm, preferably 200 to 3000 ppm, more preferably 500 to 2000 ppm, based on the weights of the bittering agent and film. For example, 1 mg of bittering agent may be incorporated into 1 g of film to provide the bittering agent at 1000 ppm.

Additionally or alternatively, the bitter agent may be included in the water-soluble package as a powdered bittering agent in a powder coating applied to the exterior surface of the water-soluble package (described in more detail below)

Preferably, the water-soluble package includes a powder coating on an exterior surface of the film, and the powder coating includes a powdered lubricating agent. The powder coating, when present, may coat printed region or regions and/or unprinted region or regions (if present) of the film. In any printed regions of the film, the powder coating may be indirectly on the exterior surface of the film where there is a layer of dye or pigment. The powder coating may be applied to least 50%, preferably at least 60%, at least 70% even more preferably at least 80%, most preferably at least 90%percent by area of the exterior surface of the film. The powder coating can be applied by any known technique such as spray-coating or passing the film through a falling curtain of powder coating composition. The powder coating may be applied to the exterior surface of the film at a rate of 0.5 to 10mg per 100cm², in some embodiments not more than 5mg per 100cm², and in further embodiments in the range of 1.25 to 2.5mg per 100cm². The powder coating may be applied to or present on the exterior surface of the film in an amount of 100 ppm or more, preferably 200 ppm or more, more preferably 300 ppm or more, based on the weights of the powder coating and the film. For example, a 1 mg of powder coating may be applied to a 1 g film to provide a 1000 ppm coating on the substrate. In certain embodiments, the powder coating is applied to or present on the exterior surface of the film in a range of 100 to 5000 ppm, preferably 200 to 3000 ppm, more preferably 300 to 2000 ppm.

### Lubricating Agent

The powder coating may include a powdered lubricating agent. Typical powdered lubricating agents include oligosaccharide, polysaccharide and inorganic lubricating agents. The powdered coating may include one or more of the group selected from starch, modified starches (including, but limited to, corn starch, potato starch or hydroxyethyl starch) silicas, siloxanes, calcium carbonate, magnesium carbonate, clay, talc, silicic acid, kaolin, gypsum, zeolites, cyclodextrins, calcium stearate, zinc stearate, alumina, magnesium stearate, sodium sulphate, sodium citrate, sodium tripolyphosphate, potassium sulphate, potassium citrate, potassium tripolyphosphate and zinc oxide. In a preferred embodiment, the powdered lubricating agent includes talc.

**The powder coating can include a bittering agent** in addition to or as an alternative to a bittering agent being present within or film-coated on the film. The powdered bittering agent may be a powdered form of any one of the bittering agents described herein. When a bittering agent is included in a powder coating, the powdered bittering agent may form 5 weight percent or more of the powder coating based on the total weight of the powder coating. In some embodiments, the powdered bittering agent forms 10 weight percent or more, 15 weight percent or more, 20 weight percent or more, or 25 weight percent or more of powder coating based on the total weight of the powder coating. In some embodiments, the powdered bittering agent forms 75 weight percent or less, 70 weight percent or less, 65 weight percent or less, 60 weight percent or less, or 55 weight percent or less of the powder coating based on the total weight of the powder coating. In further embodiments, the powdered bittering agent forms 5 to 75 weight percent, 10 to 70 weight percent, 15 to 65 weight percent, 20 to 60 weight percent, or 25 to 55 weight percent of the powder coating based on the total weight of the powder coating. In alternative embodiments, the powdered bittering agent forms 50 weight percent or less, 40 weight percent or less, 30 weight percent or less of the powder coating based on the total weight of the powder coating. In these embodiments, it is advantageous to include a relatively low amount of powdered bittering agent in the powder coating while maintaining a bitter taste when a user tries to ingest the water-soluble package.

The powdered bittering agent, when present, may have an average particle diameter of at least about 0.1 microns. The powdered bittering agent may have an average particle diameter of about 200 microns or less. In some embodiments, the powdered bittering agent has an average particle diameter of in the range of about 0.1 to 100 microns, in other embodiments in the range of about 0.1 to 20 microns and in further embodiments in a range of about 5 and 15 microns. Average particle diameter can be measured by known optical imaging techniques.

In some embodiments, the powder coating further includes one or more additional active agents. The additional active agent may be selected from one or more of the group of enzymes, oils, odour absorbers, fragrances, bleaches, bleach components, cleaning polymers, soil release polymers, EPEI, water softeners, dyes and fabric softeners.

### Plasticising surfactant

Preferably the film comprises a plasticiser comprising a sugar surfactant.

We have surprisingly found that films of the invention are improved by the plasticising action of the surfactant, with improved processability in terms of elongation and allow such films to be used for formation of secondary packaging such as soft wrap packaging, or, more preferably in the formation of water-soluble pouches for unit dose applications.

Preferably the film further includes a surfactant which may be anionic, cationic, nonionic or amphoteric. Preferably, surfactant is an anionic surfactant.

Preferably the surfactant is a **sugar-based surfactant, comprising at least one sugar group.**

### Plasticizing Sugar surfactant

The term sugar surfactant means that the surfactant includes at least one sugar moiety. Sugar surfactants are preferably composed of at least one, preferably more than two monosaccharide units linked glycosidically and may include what are terms 'sugar' moieties ( 2 monosaccharide units) or from 3 monosaccharides.

The monosaccharides of the sugar moiety maybe of the same type (homopolysaccharide) or different (heterosaccharide).

Preferably the sugar surfactant is ionic, more preferably it is anionic, cationic, or amphoteric. More preferably it is anionic.

The sugar surfactant is preferably selected from functionalised alkyl polyglycosides, fatty acid glucamides, glycinates, glycolipid biosurfactants such as rhamno-based surfactants (e.g. rhamnolipids) or sophorolipids; or any combination thereof.

Preferably the surfactant has a volume greater than 350 cubic angstron, more preferably greater than 400 cubic angstrom.

### APG based surfactants

Preferably the surfactant comprises an alkyl polyglycoside (APG) derivative also termed a functionalised APG (such terms being used interchangeably herein).

Alkylpolyglucosides are non-ionic surfactants defined by the following chemical structure, wherein m is 2 or greater and n is generally 5 or greater.

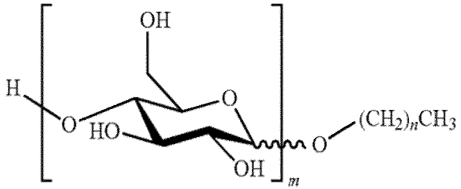

As shown, the APGs are defined by an oligomer or polymer of glucose residues and terminal alkyl group. The glucosidic portion of the compounds is hydrophilic, while the alkyl component of the compounds is lipophilic. The critical micelle concentration of the APG is generally on the order of magnitude of 0.1% or less. Modification of the relative lengths of the glucosidic and alkyl portions will modify the hydrophilic-lipophilic balance (HLB) of the compound, as well as associated polarity and surface activity properties of the compound. Functionalization or co-polymerization of an APG to yield an APG derivative as provided herein can further impart the physicochemical properties of the selected functional group or co-polymer to the APG derivatives, such as by, in some instances, water solubility, surface activity, and Lewis acidity.

Functional groups of the APG derivate include quaternary, or polyquaternary functionalized APGs. Functional group/s are preferably selected from quaternary compounds (including quaternary ammonium groups), betaines, carboxymethylates, maleates, sulfonates (including hydroxyalkylsulfonates and polysulfonates), succinates and sulfosuccinates. The synthesis of these functionalised APGs is described in US 6,627,612 and US 7,507,399. Sulfate groups and hydroxy groups can also be added.

Preferably, the APG derivatives have molecular weights of the order of about 2000 to about 6000Da. and therefore these do not bio- accumulate in the environment.

Preferably the functionalised APG surfactant is anionic. Preferably the functionallised APG includes sulfonates (including hydroxyalkylsulfonates and polysulfonates).

The functionalised APG may comprise multiple functional groups e.g. sulfonate groups. An example of a poly sulfonate functionalized alkyl polyglucosides has the representative formula:

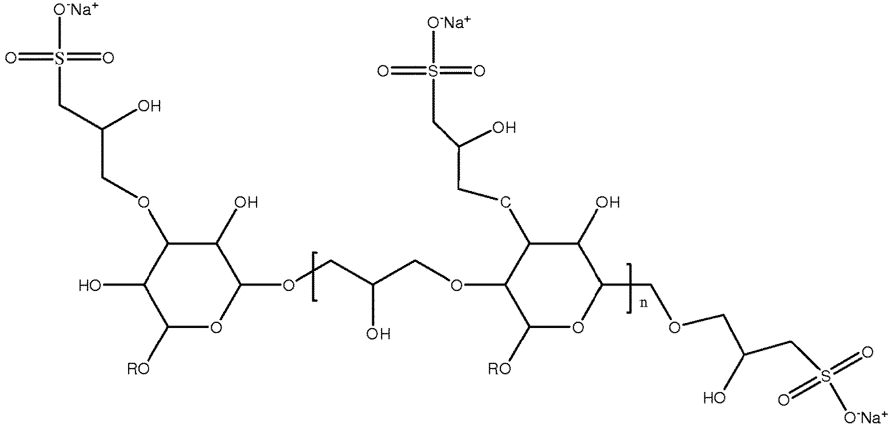

Wherein R is an alkyl group having from about 4-30, preferably 8-18 carbon atoms, and n is the degree of polymerization of 4-6. Preferably the R alkyl moiety contains primarily about 12 carbon atoms. Examples of poly sulfonate functionalized APGuseful in the films of the invention include those described, for example in United States Patent 7,507,399. A commercially available example is **Poly Suga ^{®}Nate 160P** (primarily C12 poly sulfonate functionalized APG), available from Colonial Chemical, Inc., located in South Pittsburg, TN.

The functionalised APG may comprise d-glucopyranoses of the following representative formula:

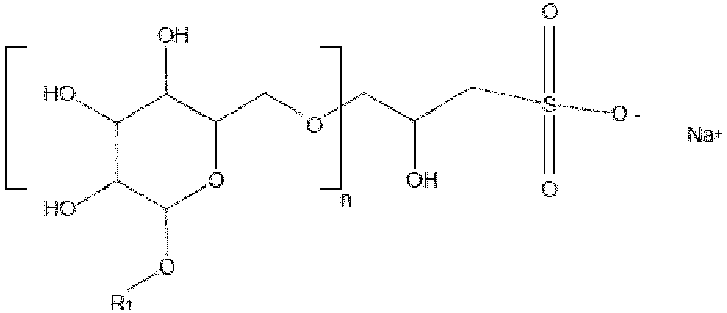

Where R₁ is an alkyl group having from about 4-30, preferably 8 to about 18 carbon atoms, and n is an integer between 1 and 21.

Examples include functionalised APGs as described in US6627612 and include sodium laurylglucosides hydroxypropylsulfonates. A commercially available example is **Suga^{®}Nate 100NC,** available from Colonial Chemical, Inc., located in South Pittsburg, TN (CAS NUMBER 742087-48-5).

The functionalised APG may comprise d-glucopyranoses or decyl octyl glycosides of the following representative formula:

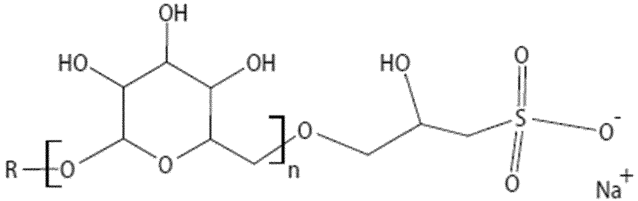

Where R is an alkyl group having from about 4-30, preferably 8 to about 18 carbon atoms, and where n is an integer ranging from 0-21.

Preferably the alkyl chain length is from 10 -16 carbon atoms.

Examples include functionalised APGs as described in US6627612 and US7045506 and include sodium laurylglucosides hydroxypropylsulfonates. A commercially available example is **Suga^{®}Nate 160NC,** available from Colonial Chemical, Inc., located in South Pittsburg, TN (CAS NUMBER 742087-49-6).

Likewise, in certain embodiments, the APG derivatives of the present disclosure can include, without limitation, hydroxypropylsulfonate functionalized APG crosspolymers, and inorganic salts thereof. A representative structure of hydroxypropylsulfonate functionalized APG crosspolymers is shown below.

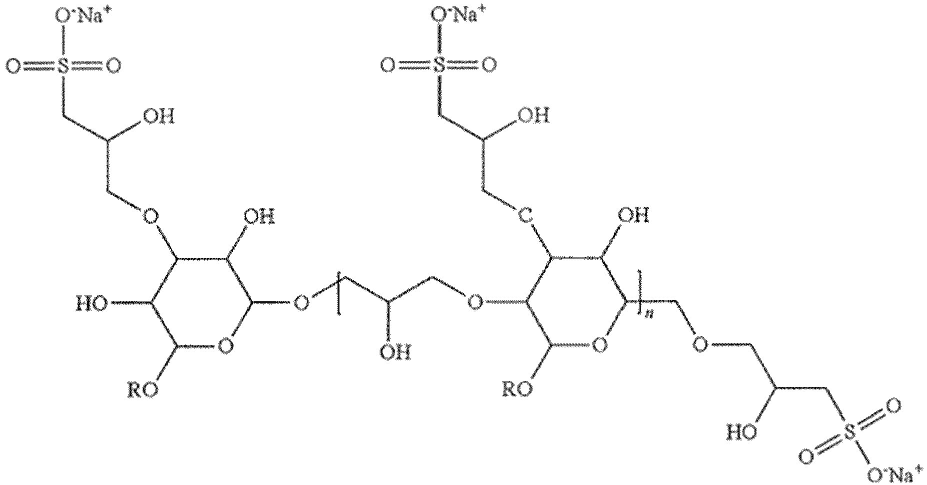

Wherein n is preferably between about 2 to about 11 and R1 is a C2 -C24 alkyl group. The APG derivatives may include sodium hydroxypropylsulfonate decylglucoside crosspolymer, and sodium hydroxypropylsulfonate laurylglucoside crosspolymer, which are commercially available from Colonial Chemicals, Inc. (US) as PolySuga^{®}Nate 100P and PolySuga^{®}Nate 160P, respectively. These and related compounds can be synthesized according to methods known in the art.

The surfactant may be present at any suitable level e.g. from 1 to 60% wt. of the film. Preferably the surfactant is present from 10%wt of the film, more preferably from 20%wt. of the film, more preferably from 30%wt. of the film.

Preferably the surfactant is present at no more than 50%wt. of the film, more preferably at no more than 40% of the film.

Mixtures of any of the above described materials may also be used.

### Glycinates

Gylinate surfactants include C10-C24 acyl glycinates. Suitable glycinates include those of formula (I) below: 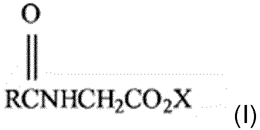 wherein R is a C9-C23 alkyl group, and X is a cation selected from the group consisting of sodium, potassium, ammonium and triethanolammonium ions

### Glucamides

The surfactant may comprise a glucamide surfactant such as an alkyl glucamide surfactant.

The composition of the invention may comprise an alkyl glucamide surfactant. Glucamide surfactants are non- ionic surfactants in which the hydrophilic moiety (an amino-sugar derivative) and the hydrophobic moiety (a fatty acid) are linked via amide bonds. This results in a chemical linkage, which is highly stable under alkaline conditions. Particularly preferred alkyl glucamide surfactants are N-alkyl-N-acylglucamides of the formula (II):

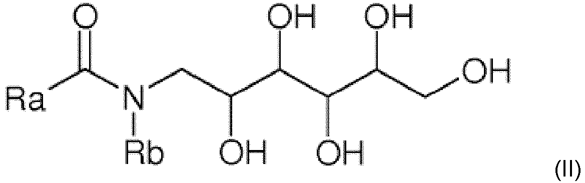

Wherein Ra is a linear or branched, saturated or unsaturated hydrocarbyl group having 6 to 22 carbon atoms, and Rb is a C1-C4 alkyl group. Particularly preferably, Rb in formula (I) is a methyl group. Non-limiting examples of these glucamide surfactants are: N-octanoyl-N- methylglucamide, N-nonanoyl-N-methylglucamide, N-decanoyl-N-methylglucamide, N- dodecanoyl-N-methylglucamide, N-cocoyl-N-methylglucamide, (available under the trade name of GlucoPure Foam by from Clariant), N-lauroyl/myristoyl-N-methylglucamide, (available under the trade name of GlucoPure Deg by from Clariant), and N-octanoyl/decanoyl-N- methylglucaminemethylglucamide, (available under the trade name of GlucoPure Wet by Clariant). Alkyl glucamine surfactants

The compositions of the invention may comprise an alkyl glucamine surfactant. These surfactants are described in EP16184415 and US20190055496.

### Glycolipid biosurfactants.

In the case of rhamnolipids the prefixes mono- and di- are used to indicate respectively to indicate mono-rhamnolipids (having a single rhamnose sugar ring) and di-rhamnolipids (having two rhamnose sugar rings) respectively. If abbreviations are used R1 is mono-rhamnolipid and R2 is di-rhamnolipid. Any rhamnolipid present may have any ratio of R1:R2. However, preferably the ratio of R1:R2 is such that R1 is always greater in proportion to R2.

If sophorolipids are utilised in the invention, acidic forms of sophorolipids are preferred.

### Co-Plasticizers

The film preferably contains one or more further or co-plasticizers. Such co-plasticizers may include, but are not limited to polyols, poly-alcohols, or sugar alcohols and may be selected from glycerol, poly glycerol, diglycerin, hydroxypropyl glycerine, ethylene glycol, diethylene glycol, triethylene glycol, tetraethylene glycol, monopropylene glycol, propylene glycol, polyethylene glycol, neopentyl glycol, trimethylpropane polyether polyols, sorbitol, manninol, ethanolamines and mixtures thereof.

### Levels

All levels %wt based on total dry weight of the film.

The pectin may be present at any suitable level e.g. from 1 - 90 %wt. Preferably it is present from 35%wt, more preferably from 40%wt of the film, more preferably from 50%wt of the film, even more preferably from 60% wt. of the film.

Preferably the pectin is present at no more than 80%wt of the film, more preferably no more than 70%wt. of the film, most preferably no more than 60%wt. of the film. The polysaccharide may be present from 50 - 80%wt of the film.

Suitable pectin amounts are selected from the range of 40 to 70 %wt., more preferably 50 to 60 %wt.

The surfactant may be present at any suitable level e.g. from 1 to 90%w preferably 1 - 60% wt. of the film. Preferably the surfactant is present at from 10%wt of the film, more preferably from 20%wt. of the film, more preferably from 30%wt. of the film.

Preferably the surfactant is present at no more than 50%wt. of the film, more preferably at no more than 40% of the film.

The further plasticiser may be present at any suitable level e.g. from 1 to 50%. Preferably the co-plasticiser is present at from 10%wt. of the film more preferably from 20%wt of the film.

Preferably the further plasticiser is present at no more than 40%wt. of the film, more preferably at no more than 30%wt. of the film.

Preferably the film comprises 60-70% pectin, 10-30% co-plasticiser and 10-30% surfactant.

The surfactant and the further plasticiser may be present in equal amounts. A particularly preferred embodiment is a film having polysaccharide, further plasticiser and surfactant in the ratio 6:2:2 (polysaccharide : further plasticiser : surfactant)

### Film Thickness

The film thickness (before incorporation into a product e.g. capsule ) is from 40 to 200 micrometres (microns). This combined with the molecular weight as described herein, provides for a film that is strong enough to withstand handling especially when it contains quantities of a home care composition but that also dissolves in water during aqueous washing processes in which that home care composition is used.

Preferably the film thickness is from 40 to 150 micrometres (microns), more preferably from 40 to 100 microns, even more preferably from 60 to 90 micrometres (microns), most preferably from 70 to 80 micrometres (microns).

Water-soluble capsules may be made using two films, e.g one (second) film superposed over another (first) film and sealed around edge regions e.g. as described herein. Where two films are used to make a capsule, the second film is typically of a similar type to that used for the first film, but slightly thinner. Thus, in embodiments, the second film is thinner than the first film. In embodiments the ratio of thickness of the first film to the thickness of the second film is from 1:1 to 2:1.

In embodiments the first film thickness (pre-thermoforming) is preferably from 40 to 200 micrometres, from 40 to 150 micrometres, from 60 to 120 micrometres, or from 80 to 100 micrometres. After capsule manufacture the average thickness of the first film is preferably from 30 to 90 micrometres, or from 40 to 80 micrometres.

In embodiments the second film thickness (pre-thermoforming) is preferably from 20 to 100 micrometres, from 25 to 80 micrometres, or from 30 to 60 micrometres.

### Layer

Preferably the film comprises a single layer, that is to say it comprises no more than one layer. One way this may be achieved is that the film is made by forming a solution of carrageenan with a solvent e.g. water and any other ingredients (plasticisers, bittering agent as examples) and this is then cast e.g. poured on to a surface such as a moving belt and then dried. Preferably, no further layers of the film are added by casting.

Preferably the capsule comprises film having a single layer.

### Capsule

Capsules made using the film may be formed in any suitable manner using the water-soluble pectin film.

The film may be folded and/or sealed to create the at least one internal compartment with an internal space which is then filled with a home care composition, and then optiionally the compartment is closed by sealing.

Alternatively the water soluble capsule may comprising a first film comprising a thermoformed recess, said recess containing a substrate treatment composition and a second film superposed over said first film, said first and second films sealed around the edges, wherein said first and second films are according to the first aspect of the invention and any preferred/optional features as described herein.

Packages comprising a film such as those described herein may be manufactured using a form fill seal approach or using a vacuum form, fill seal approach. Pouches may be formed on a continuously moving process where a film is drawn into a mould, filled from above and then sealed by application of a second film. The pouches are then separated from one another to form individual unit dose products.

Substrate treatment capsules e.g. laundry capsules maybe thermoformed which involves a moulding process to deform sheet film to provide recesses therein. The process involves heating sheet film to soften and deform the film to stretch and fill a cavity in a mould and also the application of vacuum. The recesses are filled and the capsules completed by overlaying a second sheet of film over the filled recesses and sealing it to the first sheet of film around the edges of the recesse to form a flat seal. Relaxation of the first film typically then causes the applied second sheet to bulge out when the vacuum is released from the first sheet of film in the mould. For high performance laundry or machine dish wash treatment capsules there is a need to fill the capsule with sufficient liquid. The fill volume results in a greater stretch imposed on the water-soluble and provides a capsule with a bulbous, convex outer profile as the first and second sheets bulge out and stretch under the pressure. Films need to be strong and sufficiently stretchy to allow for this process. Films according to the invention are advanatageous for thermoforming such capsules as they exhibit strength and stretch.

The two films may be heat or water sealed or other sealing solution e.g. applied to the films depending on the process machinery used.

### Sealing solutions

Preferred sealing solutions include polysacharride solutions (solubilized in water). The gluing method may utilise cold or hot water. The sealing solution may be applied to each surface to be sealed. So if two sheets are to be sealed together one or both of the contacting surfaces may have sealing solution applied thereto.

Preferred polysaccharide sealing solutions include solutions of dextran, pullanan, cellulosic e.g.sodium CMC (solubilised in water(. The concentration of the glue is preferably 1 - 5% wt. Preferred sealing solutions are dextran or pullanan (4%wt. conc), and sodium CMC (2 - 4%wt. conc.)

### Unit dose

In a further aspect there is provided a unit dose substrate product comprising a substrate treatment formulation within a sealed container, said container comprising a film according to any preceding claim.

### Manufacture

The water-soluble packages of the present invention can be manufactured using standard known techniques. The film may be printed, for example, a sheet of film (e.g. film) may be printed with one or more layers of dye or pigment in a pattern. The pattern may be indicia, such as words, symbols or drawings. The layer or layers of dye or pigment may be printed onto the film using an ink. The ink type is not particularly limited, and includes non-aqueous solvent- based inks (such as organic solvent-based inks), aqueous-based inks and/or UV cured inks. In some embodiments, the ink is a non-aqueous-based ink. The film may be printed with a primer layer before printing of the layer or layers of dye or pigment. After printing with the layer or layers of dye or pigment, the film may be printed with a protective or lacquer layer. The printed layer or layers may be then dried, for example using heat and/or air flow. The resulting printed film may be stored, transported or used immediately to form the printed water-soluble packages
as described herein.

The area of print may be achieved using standard techniques, such as flexographic printing or inkjet printing. Preferably, the area of print is achieved via flexographic printing, in which a film is printed, then moulded into the shape of an open compartment. This compartment is then filled with a detergent composition and a second film placed over the compartment and sealed to the first film. The area of print may be on either side of the film.

. When the bittering agent is contained within at least part of the film, the bittering agent is typically present in the film before printing. In one embodiment, the bittering agent is included at least on part of the exterior surface of the film as a film coating. The film coating of bittering agent may be deposited on the water-substrate before, during or after the printing of the printed regions.

The film is typically formed (preferably thermoformed) into a film enclosure (e.g. a film pocket, open capsule or container). The film enclosure may then be filled with a composition such as a dishwashing or laundry detergent composition. The water-soluble enclosure containing the composition or material can then be sealed, for example by sealing the edges of the enclosure or joining the enclosure with one or more additional pieces of film, in order to enclose the material or composition in the water-soluble package. The powder coating may then be applied to the exterior surface of the film. The powder coating may be applied to the film by any known powder technique. Preferably, the powder is applied to the film using no solvent or a non-aqueous solvent. Such an application reduces the risk of dissolving the film. The above optional and preferred features are equally combinable and applicable to all aspects of the invention, unless indicated otherwise.

In a particular embodiment, the present invention provides a printed water-soluble package comprising a film of the first aspect, the film enclosing a composition, the film having an exterior surface with one or more printed regions, the bittering agent is selected from the group consisting of denatonium benzoate, denatonium saccharide, quinine or a salt of quinine and is substantially homogenously contained within the film, and wherein the water-soluble package further includes a powder coating coated on the exterior surface of the film, the powder coating a including a powdered lubricating agent, the powdered lubricating agent being talc.

### Liquid Laundry Detergent Composition

The substrate composition may be in the form of a solid, a liquid, a dispersion, a gel, a paste, a fluid or a mixture thereof. The capsule preferably comprises a liquid composition.

Non-limiting examples of compositions include cleaning compositions, fabric care compositions, automatic dishwashing compositions and hard surface cleaners. More particularly, the compositions may be a laundry, fabric care or dish washing composition including, pre-treatment or soaking compositions and other rinse additive compositions. The laundry detergent composition may be used during the main wash process or could be used as pre-treatment or soaking compositions.

The water-soluble capsule preferably comprises a laundry detergent composition. The liquid composition may be opaque, transparent or translucent.

The or each compartment may comprise the same or a different composition. , however, it may also comprise different compositions in different compartments. The composition may be any suitable composition.

Laundry detergent compositions include fabric detergents, fabric softeners, 2-in-1 detergent and softening, pre-treatment compositions and the like. Laundry detergent compositions may comprise surfactants, builders, chelating agents, dye transfer inhibiting agents, dispersants, enzymes, and enzyme stabilizers, catalytic materials, bleach activators, polymeric dispersing agents, clay soil removal/anti-redeposition agents, brighteners, suds suppressors, dyes, additional perfume and perfume delivery systems, structure elasticizing agents, fabric softeners, carriers, hydrotropes, processing aids and/or pigments and mixtures thereof. The composition may be a laundry detergent composition comprising an ingredient selected from the group comprising a shading dye, surfactant, polymers, perfumes, encapsulated perfume materials, structurant and mixtures thereof.

The liquid laundry detergent composition may comprise an ingredient selected from, bleach, bleach catalyst, dye, hueing dye, cleaning polymers including alkoxylated polyamines and polyethyleneimines, soil release polymer, surfactant, solvent, dye transfer inhibitors, chelant, enzyme, perfume, encapsulated perfume, polycarboxylates, structurant and mixtures thereof.

Surfactants can be selected from anionic, cationic, zwitterionic, non-ionic, amphoteric or mixtures thereof. Preferably, the fabric care composition comprises anionic, non-ionic or mixtures thereof.

The anionic surfactant may be selected from linear alkyl benzene sulfonate, alkyl ethoxylate sulphate and combinations thereof.

Suitable anionic surfactants useful herein can comprise any of the conventional anionic surfactant types typically used in liquid detergent products. These include the alkyl benzene sulfonic acids and their salts as well as alkoxylated or non-alkoxylated alkyl sulfate materials.

Suitable nonionic surfactants for use herein include the alcohol alkoxylate nonionic surfactants. Alcohol alkoxylates are materials which correspond to the general formula: R¹(CₘH₂ₘO)ₙOH wherein R¹ is a C₈-C₁₆ alkyl group, m is from 2 to 4, and n ranges from about 2 to 12. In one aspect, R¹ is an alkyl group, which may be primary or secondary, that comprises from about 9 to 15 carbon atoms, or from about 10 to 14 carbon atoms. In one aspect, the alkoxylated fatty alcohols will also be ethoxylated materials that contain on average from about 2 to 12 ethylene oxide moieties per molecule, or from about 3 to 10 ethylene oxide moieties per molecule.

The shading dyes employed in the present laundry detergent compositions may comprise polymeric or non-polymeric dyes, pigments, or mixtures thereof. Preferably the shading dye comprises a polymeric dye, comprising a chromophore constituent and a polymeric constituent. The chromophore constituent is characterized in that it absorbs light in the wavelength range of blue, red, violet, purple, or combinations thereof upon exposure to light. In one aspect, the chromophore constituent exhibits an absorbance spectrum maximum from about 520 nanometers to about 640 nanometers in water and/or methanol, and in another aspect, from about 560 nanometers to about 610 nanometers in water and/or methanol.

Although any suitable chromophore may be used, the dye chromophore is preferably selected from benzodifuranes, methine, triphenylmethanes, napthalimides, pyrazole, napthoquinone, anthraquinone, azo, oxazine, azine, xanthene, triphenodioxazine and phthalocyanine dye chromophores. Mono and di-azo dye chromophores are preferred. The shading dye may comprise a dye polymer comprising a chromophore covalently bound to one or more of at least three consecutive repeat units. It should be understood that the repeat units themselves do not need to comprise a chromophore. The dye polymer may comprise at least 5, or at least 10, or even at least 20 consecutive repeat units.

The repeat unit can be derived from an organic ester such as phenyl dicarboxylate in combination with an oxyalkyleneoxy and a polyoxyalkyleneoxy. Repeat units can be derived from alkenes, epoxides, aziridine, carbohydrate including the units that comprise modified celluloses such as hydroxyalkylcellulose; hydroxypropyl cellulose; hydroxypropyl methylcellulose; hydroxybutyl cellulose; and, hydroxybutyl methylcellulose or mixtures thereof. The repeat units may be derived from alkenes, or epoxides or mixtures thereof.

The repeat units may be C2-C4 alkyleneoxy groups, sometimes called alkoxy groups, preferably derived from C2-C4 alkylene oxide. The repeat units may be C2-C4 alkoxy groups, preferably ethoxy groups.

For the purposes of the present invention, the at least three consecutive repeat units form a polymeric constituent. The polymeric constituent may be covalently bound to the chromophore group, directly or indirectly via a linking group. Examples of suitable polymeric constituents include polyoxyalkylene chains having multiple repeating units. In one aspect, the polymeric constituents include polyoxyalkylene chains having from 2 to about 30 repeating units, from 2 to about 20 repeating units, from 2 to about 10 repeating units or even from about 3 or 4 to about 6 repeating units. Non-limiting examples of polyoxyalkylene chains include ethylene oxide, propylene oxide, glycidol oxide, butylene oxide and mixtures thereof.

The dye may be introduced into the detergent composition in the form of the unpurified mixture that is the direct result of an organic synthesis route. In addition to the dye polymer therefore, there may also be present minor amounts of un-reacted starting materials, products of side reactions and mixtures of the dye polymers comprising different chain lengths of the repeating units, as would be expected to result from any polymerisation step.

The compositions can comprise one or more detergent enzymes which provide cleaning performance and/or fabric care benefits. Examples of suitable enzymes include, but are not limited to, hemicellulases, peroxidases, proteases, cellulases, xylanases, lipases, phospholipases, esterases, cutinases, pectinases, keratanases, reductases, oxidases, phenoloxidases, lipoxygenases, ligninases, pullulanases, tannases, pentosanases, malanases, beta -glucanases, arabinosidases, hyaluronidase, chondroitinase, laccase, and amylases, or mixtures thereof. A typical combination is a cocktail of conventional applicable enzymes like protease, lipase, cutinase and/or cellulase in conjunction with amylase.

The laundry detergent compositions of the present invention may comprise one or more bleaching agents. Suitable bleaching agents other than bleaching catalysts include photobleaches, bleach activators, hydrogen peroxide, sources of hydrogen peroxide, preformed peracids and mixtures thereof. In general, when a bleaching agent is used, the compositions of the present invention may comprise from about 0.1 percent to about 50 percent or even from about 0.1 percent to about 25 percent bleaching agent by weight of the subject cleaning composition.

The composition may comprise a brightener. Suitable brighteners are stilbenes, such as brightener 15. Other suitable brighteners are hydrophobic brighteners, and brightener 49. The brightener may be in micronized particulate form, having a weight average particle size in the range of from 3 to 30 micrometers, or from 3 micrometers to 20 micrometers, or from 3 to 10 micrometers. The brightener can be alpha or beta crystalline form.

The compositions herein may also optionally contain one or more copper, iron and/or manganese chelating agents. If utilized, chelating agents will generally comprise from about 0.1 percent by weight of the compositions herein to about 15 percent, or even from about 3.0 percent to about 15 percent by weight of the compositions herein.

The composition may comprise a calcium carbonate crystal growth inhibitor, such as one selected from the group consisting of: 1-hydroxyethanediphosphonic acid (HEDP) and salts thereof; N,N-dicarboxymethyl-2-aminopentane-1,5-dioic acid and salts thereof; 2-phosphonobutane-1,2,4-tricarboxylic acid and salts thereof; and any combination thereof.

The compositions of the present invention may also include one or more dye transfer inhibiting agents. Suitable polymeric dye transfer inhibiting agents include, but are not limited to, polyvinylpyrrolidone polymers, polyamine N-oxide polymers, copolymers of N-vinylpyrrolidone and N-vinylimidazole, polyvinyloxazolidones and polyvinylimidazoles or mixtures thereof. When present in the compositions herein, the dye transfer inhibiting agents are present at levels from about 0.0001 percent, from about 0.01 percent, from about 0.05 percent by weight of the cleaning compositions to about 10 percent, about 2 percent, or even about 1 percent by weight of the cleaning compositions.

The laundry detergent composition may comprise one or more polymers. Suitable polymers include carboxylate polymers, polyethylene glycol polymers, polyester soil release polymers such as terephthalate polymers, amine polymers, cellulosic polymers, dye transfer inhibition polymers, dye lock polymers such as a condensation oligomer produced by condensation of imidazole and epichlorhydrin, optionally in ratio of 1:4:1, hexamethylenediamine derivative polymers, and any combination thereof.

Other suitable cellulosic polymers may have a degree of substitution (DS) of from 0.01 to 0.99 and a degree of blockiness (DB) such that either DS+DB is of at least 1.00 or DB+2DS-DS² is at least 1.20. The substituted cellulosic polymer can have a degree of substitution (DS) of at least 0.55. The substituted cellulosic polymer can have a degree of blockiness (DB) of at least 0.35. The substituted cellulosic polymer can have a DS+DB, of from 1.05 to 2.00. A suitable substituted cellulosic polymer is carboxymethylcellulose. Another suitable cellulosic polymer is cationically modified hydroxyethyl cellulose. Suitable perfumes include perfume microcapsules, polymer assisted perfume delivery systems including Schiff base perfume/polymer complexes, starch-encapsulated perfume accords, perfume-loaded zeolites, blooming perfume accords, and any combination thereof. A suitable perfume microcapsule is melamine formaldehyde based, typically comprising perfume that is encapsulated by a shell comprising melamine formaldehyde. It may be highly suitable for such perfume microcapsules to comprise cationic and/or cationic precursor material in the shell, such as polyvinyl formamide (PVF) and/or cationically modified hydroxyethyl cellulose (catHEC).

Suitable suds suppressors include silicone and/or fatty acid such as stearic acid.

The liquid laundry detergent composition maybe coloured. The colour of the liquid laundry detergent composition may be the same or different to any printed area on the film of the article. Each compartment of the unit dose article may have a different colour. Preferably, the liquid laundry detergent composition comprises a non-substantive dye having an average degree of alkoxylation of at least 16.

At least one compartment of the unit dose article may comprise a solid. If present, the solid may be present at a concentration of at least 5 percent by weight of the unit dose article.

The second water-soluble film may comprise at least one open or closed compartment. In one embodiment, a first web of open pouches is combined with a second web of closed pouches preferably wherein the first and second webs are brought together and sealed together via a suitable means, and preferably wherein the second web is a rotating drum set-up. In such a set-up, pouches are filled at the top of the drum and preferably sealed afterwards with a layer of film, the closed pouches come down to meet the first web of pouches, preferably open pouches, formed preferably on a horizontal forming surface. It has been found especially suitable to place the rotating drum unit above the horizontal forming surface unit.

Preferably, the resultant web of closed pouches are cut to produce individual unit dose articles.

Those skilled in the art would recognize the appropriate size of mould needed in order to make a unit dose article according to the present invention.

When carrying or containing a substrate treatment composition, this may be a laundry treatment composition such as a laundry liquid or powder composition. Such formulations are well known in the art and comprise water up to around 15% wt. of the composition; surfactants such as anionic surfactants, non-ionic surfactants, zwitterionic surfactants and mixtures thereof. Further, polymeric cleaning aids such as soil release polymers and polyamines are commonly employed to improve cleaning performance. Fragrances are added for providing a fragrance benefit to the fabric after treatment.

Visual cues such as dyes are used to provide improved aesthetics.

### Combinations of aspects

A number of proposals and aspects are described herein, which proposals and aspects are intended to be combined to achieve improved or cumulative benefits. Thus, any one aspect may be combined with any other aspect. Similarly the optional features associated with any one of the aspects may apply to any one of the other aspects.

### EXAMPLES

Exemplary films were made with varying ratios of pectin, surfactants (suganate) and glycerol as below. It is noted that the examples containing pectin with batch code CPK2157 are not according to the invention.

**Table 1: Pectin**

| **Supplier** | **Product name** | **Source** | **Batch Code** | **DM (%)** | **DA (%)** | **MW (g/mol)** | **Mn (g/mol)** | **Mz (g/mol)** |
|---|---|---|---|---|---|---|---|---|
| **Silva Teams** | Aglupectin LAS-20P | Citrus peel | LAS-20P CL1834 | 23.9 | 24.2 | 414,874 | 162,441 | 1,138,344 |
| | | | LAS-20P CL1835 | 24.5 | 24.0 | 449,512 | 135,899 | 1,670,917 |
| **CP Kelko** | GENU pectin LM-HC-25 As | Citrus peel | CPK2156 | 27 | 20 | 292,157 | 102,640 | 932,127 |
| | | | CPK2157 | 20-26 | 18-25 | 189,449 | 83,127 | 428,555 |
| **Herbstreith & Fox** | Pectin Amid CU 025 | Citrus peel & apple | H&F | 25-31 | 18-25 | 308,658 | 119,411 | 808,237 |

**Glycerol** (95% conc.)
**Surfactants:**
**Suganate type "100NC" is Suga^{®}Nate 100NC,** available from Colonial Chemical, Inc., located in South Pittsburg, TN (CAS NUMBER 742087-48-5).
**Suganate type "160NC" is Suga^{®}Nate 160NC,** available from Colonial Chemical, Inc., located in South Pittsburg, TN (CAS NUMBER 742087-49-6).
**Suganate type "poly" is Poly Suga ^{®}Nate 160P** (primarily C12 poly sulfonate functionalized alkyl polyglucoside), available from Colonial Chemical, Inc., located in South Pittsburg, TN.
**Bitrex^{®}** when used, it was used as granules at a level of 1000ppm of Bitrex^{®} in the dry film.

In these examples, film combinations are given as pectin:glycerol:surfactant ratios

### Method for making the pectin film compositions of Table 1.

### Preparation of polymer solutions to cast films of Table 1

1. Film components were mixed with water to provide a casting solution with amount of solids percentage in solution being12.5%: so, for 100g of film solution (enough for 1xA4 size sheets) we have 7.5g of Pectin, 3.6g of glycerol, 6.25g of suganate 100NC (40% Activity) and 83.75g of water.
2. Pectin was dissolved in boiling water with overhead stirrer (added gradually) then left for approx. 5-10 minutes to dissolve and glycerine added - in ratios according to the table.
3. Three types of anionic sugar surfactant (suganate 100NC, 160NC or poly ) were used as shown in Table 1)
4. The solution was left to stir for approximately 5 minutes until full dissolution and mixing, ensuring the stirrer was fully immersed to avoid formation of bubbles.
5. The mixture was then centrifuged for 45minutes at 5000rpm to degas and remove bubbles.

### Casting

- Thicknesses of dry films varied from 40-100 µm by varying casting knife thickness or wt% solids.
- Films were prepared at from 10-12.5wt% solids in solution aiming for a viscosity of ~2500 CP.

Films were cast on to a polyacrylate substrate using a Elcometer 4340 Motorised / Automatic Film Applicator and Elcometer 3570 Micrometric Film Applicators. Pectin and sugar (dextrose or sucrose) were mixed with hot DI water (70C) and mechanically stirred at 500rpm and 70C for 20min, glycerol and suganate 100NC were then added once pectin was dissolved and mechanically stirred until properly mixed. The solution was then poured into centrifuge tubes and centrifuged to remove air bubbles. If left overnight instead of centrifuging, air bubbles are also removed. The films were cast using an automated casting machine with a casting speed of 2cm/s and a casting knife thickness of 700-1000µm onto an acrylic plate, dried at room temperature, and peeled from the plate for testing. Films can also be dried at 40C for 2h.

### Example 2 Film Dissolution Tests

Film pieces are cut to the size 4cm x 2.5cm were dissolved in 150mL of demineralised water at 40°C in a 250mL beaker stirring at 150 rpm and recorded time until total film dissolution.

### Example 3: Methods of making the capsules containing a substrate treatment formulation.

Two sheets of the film were prepared as described above. The sheets can be sealed around the edges (except for one edge) to form an open package, the package filled with a substrate treatment composition, and then the edge sealed. This forms a simple pillow-shaped package.

In another method, the capsule is produced by a process of thermoforming:
(a) the first sheet of water-soluble polyvinyl alcohol film was placed over a mould having a cavity;
(b) the cavity is heated and also a vacuum applied to the film to mould the film into the cavities and hold it in place to form a corresponding recess in the film;
(c) the recess is then filled with a substrate treatment composition;
(d) the second sheet of film is superposed over the first sheet of film across the formed recess and sealed around the edge to produce a capsule having a compartment bounded by a continuous seal (referred to as a sealing web);
(e) the capsule is trimmed to remove excess sheet.

Relaxation of the first film typically then causes the applied second sheet to bulge out when the vacuum is released from the first sheet of film in the mould. Where mulitple capsules are made from a single sheet (which may be fed from a roll) the film is cut between the capsules so that a series of capsules are formed.

Sealing can be done by any suitable method for example heat-sealing, solvent sealing or UV sealing or ultra-sound sealing or any combination thereof. Particularly preferred is water-sealing. Water sealing may be carried out by applying water/moisture to the second sheet of film before it is sealed to the first sheet of film to form the seal areas.

### Example 4 Liquid Capsules dissolution Tests

Capsules are made according to the above example 5, filled with a commercially available laundry detergent composition. The capsules are tested for dissolution.
1. Add 4.5 litres of demineralised water into a 5-litre beaker at
2. Heat up the water to 30°C
3. Place the beaker on the magnetic stirrer plate and add a large magnetic stirrer
4. Turn on the magnetic stirrer so that the vortex is 3cm in depth
5. Place the capsule in the centre of the open holed net, gather the net up above the capsule and fasten with an elastic band (the capsule is held in a net to simulate the capsule being held in-between fabrics and it allows the water to flow through the net)
6. Clamp the stirrer paddle with the capsule in a net attached above the beaker
7. Lower the net into the water up to the mark indicated on the paddle and start the clock immediately
8. Time how long it takes for the capsule to dissolve by noting the following: Bubble from liquid, Liquid leaking time, Liquid gone, film dissolved.

All capsules dissolve in the target range 30s - 30 mins releasing the formulation into the water.

### Bitrex impregated Films

Bitrex impregnated films as described above are printed with a UV-curable ink , and the thin film is UV-cured. Capsules are made as described above using this film and then filled with two different commercially available laundry detergent compositions. The capsules are loaded into standard laundry detergent capsule containers.

The containers are placed in storage at a range of climatic conditions: 20°C & 65% relative humidity (RH); 28°C & 70% RH; and 37°C & 70% RH. Such conditions simulate west European ambient conditions and accelerated testing. The capsules are assessed visually at various time points.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

### Ultimate stress and strain analysis.

### Method of measuring strain and stress.

Film samples of varying thickness were subjected to tensile: stress and strain tests using an Instron model 5566. For these tensile studies, strain is the elongation before break and the stress is the force applied before break. We used a 100N load cell on film strips 12cm x 2.5cm, following ASTM D882 and we use a speed rate of maximum 8mm per second. This method is a standard test method for analysing the tensile characteristics of thin plastic sheeting. In this test, the plastic sheet is pulled until it breaks for measuring the elongation, tensile yield strength, tensile modulus, and tensile strength at break, and is specifically designed for films of less than 1mm in thickness.

Ultimate strain gives an indication of how much a film can stretch.

For certain products strength is more important as the film does not need to stretch substantially.

For certain products, both elongation and strength is important. One example is (thermo)formed capsules, comprising sheet film which is stretched substantially during forming to form a 3-D shape. For example, for a rounded, generally hemispherical deformation the film needs to stretch by about 40% (to a total of 140%). Such a recess allows sufficient (for performance, especially cleaning) levels of homecare especially laundry substrate composition. However, the film must also be sufficiently strong not to break as it stretches. Therefore, for deep recess capsules ultimate stress is also important, to ensure the strength of a film (under tension). At the same time, the film must not be too thick as this can slow down dissolution. Both strength and stretch in a thin film are needed for a film to be a viable manufacturing material.

### Film Ultimate Strain and Stress Test Results

(Film combinations are given as pectin: glycerol: surfactant ratios so that 5:2.5:2.5 means the ratio is pectin 5: glycerol 2.5 : surfactant 2.5). three different film compositions were tested. 5:3:2, 5:4:1 and 6:2:2

| **Film material ratio pectin:glycerol:surfactant** | **Thickness (µm)** | **Molecular weight** | **Ultimate Strain Average (%)** | **SD (%)** | **Ultimate Stress (MPa)** | **SD (MPa)** |
|---|---|---|---|---|---|---|
| 5:3:2 | 45 | 414,874 | 12.19 | 1.76 | 38.49 | 6.48 |
| 5:3:2 | 65 | 308,658 | 24.70 | 1.32 | 31.77 | 3.36 |
| 5:3:2 | 65 | 292,157 | 14.20 | 1.67 | 15.72 | 0.64 |
| | | | | | | |
| 5:4:1 | 40 | 414,874 | 10.81 | 0.81 | 36.14 | 3.27 |
| 5:4:1 | 55 | 308,658 | 17.34 | 3.49 | 34.16 | 4.03 |
| 5:4:1 | 65 | 292,157 | 32.05 | 1.32 | 20.60 | 4.02 |
| | | | | | | |
| 6:2:2 | 50 | 449,512 | 9.50 | 1.87 | 64.50 | 4.70 |
| 6:2:2 | 50 | 414,874 | 7.70 | 1.51 | 64.10 | 4.50 |
| 6:2:2 | 40 | 308,658 | 7.34 | 2.68 | 49.50 | 7.80 |
| 6:2:2 | 50 | 292,157 | 13.42 | 3.73 | 40.30 | 3.80 |
| 6:2:2 | 60 | 189,449 | 9.87 | 3.17 | 42.70 | 8.50 |
| 6:2:2 | 55 | 189,449 | 8.95 | 1.08 | 42.53 | 2.64 |

The results show for all these film compositions that ultimate stress increases as molecular increases.

### Methods of making the capsules containing a substrate treatment formulation.

Two sheets of the film were prepared as described above. The sheets can be sealed around the edges (except for one edge) to form an open package, the package filled with a substrate treatment composition, and then the edge sealed. This forms a simple pillow-shaped package.

In another method, the capsule is produced by a process of thermoforming:
(a) the first sheet of water-soluble polyvinyl alcohol film was placed over a mould having a cavity;
(b) the cavity is heated and also a vacuum applied to the film to mould the film into the cavities and hold it in place to form a corresponding recess in the film;
(c) the recess is then filled with a substrate treatment composition;
(d) the second sheet of film is superposed over the first sheet of film across the formed recess and sealed around the edge to produce a capsule having a compartment bounded by a continuous seal (referred to as a sealing web);
(e) the capsule is trimmed to remove excess sheet.

Relaxation of the first film typically then causes the applied second sheet to bulge out when the vacuum is released from the first sheet of film in the mould. Where mulitple capsules are made from a single sheet (which may be fed from a roll) the film is cut between the capsules so that a series of capsules are formed.

Sealing can be done by any suitable method for example heat-sealing, solvent sealing or UV sealing or ultra-sound sealing or any combination thereof. Particularly preferred is water-sealing. Water sealing may be carried out by applying water/moisture to the second sheet of film before it is sealed to the first sheet of film to form the seal areas.

### Liquid Capsules dissolution Tests

Capsules are made according to the above example 5, filled with a commercially available laundry detergent composition. The capsules are tested for dissolution.
9. Add 4.5 litres of demineralised water into a 5-litre beaker at
10. Heat up the water to 30°C
11. Place the beaker on the magnetic stirrer plate and add a large magnetic stirrer
12. Turn on the magnetic stirrer so that the vortex is 3cm in depth
13. Place the capsule in the centre of the open holed net, gather the net up above the capsule and fasten with an elastic band (the capsule is held in a net to simulate the capsule being held in-between fabrics and it allows the water to flow through the net)
14. Clamp the stirrer paddle with the capsule in a net attached above the beaker
15. Lower the net into the water up to the mark indicated on the paddle and start the clock immediately
16. Time how long it takes for the capsule to dissolve by noting the following: Bubble from liquid, Liquid leaking time, Liquid gone, film dissolved.

All capsules dissolve in the target range 30s - 30 mins releasing the formulation into the water.

### EXAMPLE CAPSULE - LAUNDRY TREATMENT COMPOSITION

The water soluble capsules comprise laundry treatment compositions dispensed to each of the three compartments is as follows:

| ***Compartment #1*** | ***Compartment #2*** | ***Side compartment #2*** |
|---|---|---|
| Surfactant | Surfactants | Surfactants |
| Polymer cleaning | Polymer cleaning | Polymer cleaning |
| Sequestrant | Sequestrant | Sequestrant |
| Water | Enzyme -cellulase | Enzyme - protease |
| Hydroptrope | Fluorescer | Water 8%wt. |
| Opacifier | Water 8%wt | Hydrotrope |
| | Hydrotrope | Dyes |
| | Dyes | |
| | Perfume | |

The unit dosed products comprise water soluble film printed on the inside.

Further example formulations of unit dose products are provided below.

| **DESCRIPTION** | **1** | **2** |
|---|---|---|
| | | |
| **Raw Material** | **Inclusion level as 100%** | **Inclusion level as 100%** |
| **SURFACTANT** | | |
| LAS/SLES/NI ratio | 58/30/12 | 47/0/53 |
| LAS acid | 25.20 | 21.22 |
| SLES 3EO | 13.00 | |
| MIPA-LES 2EO | | |
| Non Ionic 7EO | 5.60 | 23.50 |
| Fatty acid / Oleic acid | 6.60 | 8.64 |

| **HYDROTOPE** | | |
|---|---|---|
| Glycerol | 7.70 | 13.10 |
| Mono Propyl Glycerol | 12.80 | 8.30 |

| **NEUTRALIZER/BUFFER** | | |
|---|---|---|
| MEA | 10.50 | 6.50 |

| **WHITENESS AGENT** | | |
|---|---|---|
| CBS-CL | 0.39 | 0.40 |

| **SALTS & SEQUESTRANTS & BUILDERS** | | |
|---|---|---|
| Dequest 2010 | 2.90 | |
| Dequest 2066 | | 0.65 |
| Citric Acid | 0.70 | |

| **Enzymes** | | |
|---|---|---|
| Mannanase (% as Mannaway 4L) | 1.00 | 1.00 |
| Cellulase (% as Celluclean4500T) | 1.00 | 1.00 |
| Protease (% as Savinase ultra 16L) | 1.00 | 1.00 |
| Amylase (% as Stainzyme 12L) | 1.00 | 1.00 |

The unit dosed products comprise water soluble film.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

## Claims

1. A water-soluble film comprising pectin having a weight average molecular weight in the range of 250,000 - 500,000 g/mol g/mol and wherein the film thickness is from 40 to 200 micrometres (microns).

2. A water-soluble film according to any preceding claim wherein the film comprises a surfactant.

3. A water-soluble film according to any preceding claim wherein the film comprises an anionic surfactant.

4. A water-soluble film according to any preceding claim wherein the film comprises a functionalised APG comprising functional groups selected from quaternary compounds optionally including quaternary ammonium groups, betaines, carboxymethylates, maleates, sulfonates optionally including hydroxyalkylsulfonates and polysulfonates, succinates and sulfosuccinates..

5. A water-soluble film according to any preceding claim wherein the film comprises a bittering agent.

6. A water-soluble film according to any preceding claim wherein the pectin is a low methoxy, amidated pectin.

7. A water-soluble film according to any preceding claim wherein the pectin is present from 35%wt based on total weight of the film.

8. A water-soluble film according to any preceding claim comprising at least one co-plasticiser preferably polyol, a poly glycerol or a poly alcohol or mixtures thereof.

9. A water-soluble film according to any preceding claim wherein said film comprises from 1 - 99%wt plasticiser based on total weight of dry e.g cast film.

10. A water soluble capsule comprising a first film comprising a thermoformed recess, said recess containing a home care composition and a second film superposed over said first film, said first and second films sealed around the edges, wherein said first and second films are according to any of claims 1 - 9.

11. A method of making a water-soluble capsule comprising the steps of
a. thermoforming a first film of to provide a thermoformed recess in said first film;
b. filling said recess with a home care composition;
c. superposing a second film over said first film
d. sealing said first film to said second film to provide a seal around edge regions of the films;
wherein the at least the first or second film and preferably both the first and the second film are according to any of claims 1-9.

## Patentansprüche

1. Wasserlöslicher Film, der Pektin mit einem gewichtsmittleren Molekulargewicht im Bereich von 250.000 bis 500.000 g/mol umfasst, wobei die Filmdicke 40 bis 200 Mikrometer (Mikron) beträgt.

2. Wasserlöslicher Film nach einem vorhergehenden Anspruch, wobei der Film ein Tensid umfasst.

3. Wasserlöslicher Film nach einem vorhergehenden Anspruch, wobei der Film ein anionisches Tensid umfasst.

4. Wasserlöslicher Film nach einem vorhergehenden Anspruch, wobei der Film ein funktionalisiertes APG umfasst, das funktionelle Gruppen umfasst, die unter quaternären Verbindungen, die gegebenenfalls quaternäre Ammoniumgruppen einschließen, Betainen, Carboxymethylaten, Maleaten, Sulfonaten, die gegebenenfalls Hydroxyalkylsulfonate und Polysulfonate einschließen, Succinaten und Sulfosuccinaten ausgewählt sind.

5. Wasserlöslicher Film nach einem vorhergehenden Anspruch, wobei der Film einen Bitterstoff umfasst.

6. Wasserlöslicher Film nach einem vorhergehenden Anspruch, wobei das Pektin ein amidiertes Pektin mit niedrigem Methoxygehalt ist.

7. Wasserlöslicher Film nach einem vorhergehenden Anspruch, wobei das Pektin in einer Menge von mindestens 35 Gew.-%, bezogen auf das Gesamtgewicht des Films, vorliegt.

8. Wasserlöslicher Film nach einem vorhergehenden Anspruch, der mindestens einen Co-Weichmacher, vorzugsweise ein Polyol, ein Polyglycerin oder einen Polyalkohol oder Mischungen davon, umfasst.

9. Wasserlöslicher Film nach einem vorhergehenden Anspruch, wobei der Film 1 bis 99 Gew.-% Weichmacher, bezogen auf das Gesamtgewicht des trockenen, z.B. gegossenen Films, umfasst.

10. Wasserlösliche Kapsel, umfassend einen ersten Film mit einer thermogeformten Vertiefung, wobei die Vertiefung eine Zusammensetzung für die Haushaltspflege enthält, und einen zweiten Film, der auf den ersten Film aufgelegt ist, wobei der erste und der zweite Film an den Rändern versiegelt sind, wobei der erste und der zweite Film dem Film nach einem der Ansprüche 1-9 entsprechen.

11. Verfahren zur Herstellung einer wasserlöslichen Kapsel, umfassend die folgenden Schritte:
a. Thermoformen eines ersten Films, um eine thermogeformte Vertiefung in dem ersten Film bereitzustellen;
b. Befüllen der Vertiefung mit einer Zusammensetzung für die Haushaltspflege;
c. Auflegen eines zweiten Films auf den ersten Film;
d. Versiegeln des ersten Films mit dem zweiten Film, um eine Versiegelung entlang der Randbereiche der Filme bereitzustellen;
wobei mindestens der erste oder der zweite Film und vorzugsweise sowohl der erste als auch der zweite Film dem Film nach einem der Ansprüche 1 bis 9 entsprechen.

## Revendications

1. Film hydrosoluble comprenant de la pectine ayant une masse moléculaire moyenne en masse comprise entre 250 000 et 500 000 g/mol, et dans lequel l'épaisseur du film est de 40 à 200 micromètres (microns).

2. Film hydrosoluble selon la revendication précédente, dans lequel le film comprend un tensioactif.

3. Film hydrosoluble selon l'une quelconque des revendications précédentes, dans lequel le film comprend un tensioactif anionique.

4. Film hydrosoluble selon l'une quelconque des revendications précédentes, dans lequel le film comprend un APG fonctionnalisé comprenant des groupes fonctionnels choisis parmi des composés quaternaires, comprenant éventuellement des groupes ammonium quaternaire, des bétaïnes, des carboxyméthylates, des maléates, des sulfonates, comprenant éventuellement des hydroxyalkylsulfonates et des polysulfonates, des succinates et des sulfosuccinates.

5. Film hydrosoluble selon l'une quelconque des revendications précédentes, dans lequel le film comprend un agent amérisant.

6. Film hydrosoluble selon l'une quelconque des revendications précédentes, dans lequel la pectine est une pectine amidée faiblement méthoxylée.

7. Film hydrosoluble selon l'une quelconque des revendications précédentes, dans lequel la pectine est présente à partir de 35 % en poids sur la base du poids total du film.

8. Film hydrosoluble selon l'une quelconque des revendications précédentes, comprenant au moins un co-plastifiant, de préférence un polyol, un polyglycérol, un polyalcool ou un mélange de ceux-ci.

9. Film hydrosoluble selon l'une quelconque des revendications précédentes, dans lequel ledit film comprend de 1 à 99 % en poids de plastifiant sur la base du poids total du film sec, par exemple du film coulé.

10. Capsule hydrosoluble comprenant un premier film comprenant un évidement thermoformé, ledit évidement contenant une composition d'entretien domestique, et un deuxième film superposé audit premier film, lesdits premier et deuxième films étant scellés autour des bords, dans laquelle lesdits premier et deuxième films sont conformes à l'une quelconque des revendications 1 à 9.

11. Procédé de fabrication d'une capsule hydrosoluble comprenant les étapes suivantes :
a. thermoformage d'un premier film afin de former un évidement thermoformé dans ledit premier film ;
b. remplissage dudit évidement avec une composition d'entretien domestique ;
c. superposition d'un deuxième film audit premier film ;
d. scellement dudit premier film audit deuxième film afin de former un scellement autour des régions de bord des films ;
dans lequel au moins le premier ou le deuxième film, et de préférence à la fois le premier et le deuxième film, sont conformes à l'une quelconque des revendications 1 à 9.
